# EUROPEAN PATENT APPLICATION

(11) **EP 4 610 518 A1**
(43) Date of publication of application: **03.09.2025**
(21) Application number: 23882738.0
(22) Date of filing: 26.10.2023
(51) Int. Cl.: F16H 25/22, F16H 25/24

(54) **BALL SCREW**

(30) Priority: 28.10.2022 JP 2022173621
(71) Applicant: NSK LTD., Tokyo 141-8560 (JP)
(72) Inventor: YAMAMOTO Shimpei, Fujisawa-shi, Kanagawa 251-8501 (JP)
(74) Representative: Grünecker Patent- und Rechtsanwälte PartG mbB
(86) International application number: PCT/JP2023/038794
(87) International publication number: WO 2024/090536

(57) **Abstract**

A ball screw is a ball screw used in a state where an axis is inclined with respect to a horizontal direction, and the ball screw includes: a screw shaft in which an outer peripheral screw groove is formed; a nut in which an inner peripheral screw groove is formed; a plurality of balls accommodated in a plurality of rolling passages formed by the outer peripheral screw groove and the inner peripheral screw groove facing each other; and a circulation member configured to return each of the balls from one end to the other end of each of the rolling passages, in which a compression preload is applied to the ball screw, and the nut has a lubricating oil supply passage having one end that opens outward and the other end that opens in an inner peripheral surface in the vicinity of an offset point.

## Description

### TECHNICAL FIELD

The present invention relates to a ball screw.

### BACKGROUND ART

A ball screw used in a machine tool or the like is generally configured such that a large number of balls are rollably disposed between a screw groove formed on an outer peripheral surface of a screw shaft and a screw groove formed on an inner peripheral surface of a nut. For example, when a rotational torque about an axis is applied to the screw shaft, the large number of balls roll between both screw grooves of the screw shaft and the nut. Accordingly, the nut reciprocates in an axial direction of the screw shaft.

In a ball screw used in a gear grinding machine or the like, there is an application in which axes are alternately inclined. When the ball screw is used in a state where the axis is inclined with respect to a vertical direction or in a state where the axis is inclined with respect to a horizontal direction, there is a problem of where a supply hole for lubricating oil is disposed.

For example, in a ball screw in which a supply hole for lubricating oil is provided in an end in the axial direction of a nut, when the axis is inclined such that the supply hole comes to the uppermost position of the nut, the lubricating oil supplied from the supply hole to the inside of the nut is supplied to the entire region inside the nut due to gravity. However, when the axis is inclined so that the supply hole comes to the lowermost position of the nut, the lubricating oil supplied from the supply hole to the inside of the nut stays in the vicinity of the supply hole and cannot lubricate the entire nut. Even if the supply hole for the lubricating oil is disposed at any position, a similar problem is more or less present.

Patent Literature 1 discloses a ball screw capable of supplying a lubricant to all balls existing in raceways by forming a greasing hole of a nut at a position corresponding to an upper end of the raceway in an arrangement in which an axial direction of a screw shaft is along an up-down direction.

### CITATION LIST

### PATENT LITERATURE

Patent Literature 1: JP2015-108400A

### SUMMARY OF INVENTION

### TECHNICAL PROBLEM

However, according to the ball screw disclosed in Patent Literature 1, it is necessary to form the greasing holes at two positions according to an inclination direction of the screw shaft, which takes time and effort for processing. A mechanism for selecting the greasing hole and supplying the lubricating oil is also complicated, which increases a cost of the ball screw.

The present invention has been made in view of the above problems, and an object thereof is to provide a ball screw that has a simple configuration and can be manufactured at low cost while ensuring lubricity.

### SOLUTION TO PROBLEM

A ball screw is a ball screw used in a state where an axis is inclined with respect to a horizontal direction, and the ball screw includes:
a screw shaft in which an outer peripheral screw groove is formed;
a nut in which an inner peripheral screw groove is formed;
a plurality of balls accommodated in a plurality of rolling passages formed by the outer peripheral screw groove and the inner peripheral screw groove facing each other; and
a circulation member configured to return each of the balls from one end to the other end of each of the rolling passages, in which
a compression preload is applied to the ball screw, and
the nut has a lubricating oil supply passage having one end that opens outward and the other end that opens in an inner peripheral surface in the vicinity of an offset point.

### ADVANTAGEOUS EFFECTS OF INVENTION

According to the present invention, it is possible to provide a ball screw that has a simple configuration and can be manufactured at low cost while ensuring lubricity.

### BRIEF DESCRIPTION OF DRAWINGS

FIG. 1 is a plan view of a ball screw according to an embodiment.
FIG. 2 is a schematic diagram illustrating compression preload.
FIG. 3A is a schematic view of the ball screw disposed in a state where an axis is inclined such that a left end side of a screw shaft faces downward, and FIG. 3B is a schematic view of the ball screw disposed in a state where the axis is inclined such that a right end side of the screw shaft faces downward.
FIG. 4A is a schematic view of the ball screw to which a moment load is applied in a state where the axis is inclined such that the left end side of the screw shaft faces downward, and FIG. 4B is a schematic view of the ball screw to which the moment load is applied in a state where the axis is inclined such that the right end side of the screw shaft faces downward.
FIG. 5 is a cross-sectional view of a ball screw according to a modification.
FIG. 6 is a bottom view of a ball screw according to another modification.

### DESCRIPTION OF EMBODIMENTS

Hereinafter, an embodiment of the present invention will be described in detail with reference to the drawings.

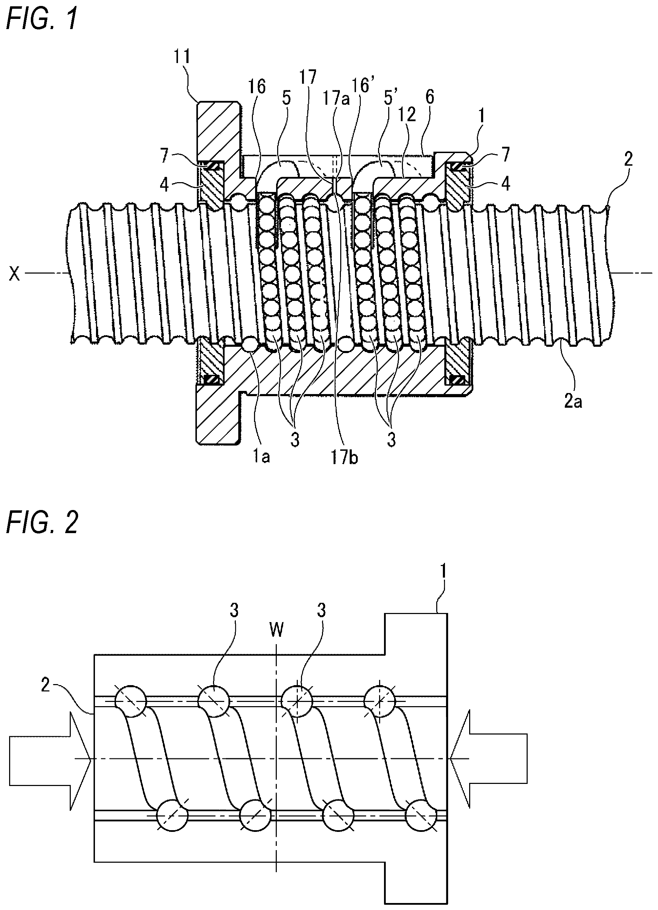

FIG. 1 is a cross-sectional view showing a ball screw according to the present embodiment.

As shown in FIG. 1, the ball screw includes a nut 1, a screw shaft 2, a plurality of balls 3, ring-shaped seals 4, tubes (circulation members) 5 and 5', and a tube presser 6. Spiral grooves (inner peripheral screw grooves) 1a are formed on an inner peripheral surface of the nut 1, and spiral grooves (outer peripheral screw grooves) 2a are formed on an outer peripheral surface of the screw shaft 2. The balls 3 are disposed between raceways formed by the spiral grooves 1a of the nut 1 and the spiral grooves 2a of the screw shaft 2. A flange 11 is formed at one axial end of the nut 1.

In the present embodiment, the seals 4 disposed at both ends of the nut 1 are contact seals whose inner peripheries are in contact with an outer periphery of the screw shaft 2, and a space between the outer peripheries of the seals 4 and the inner periphery of the nut 1 is sealed by O-rings 7.

The ball screw has two circulation circuits each including a raceway (a rolling passage formed by the spiral groove 1a and the spiral groove 2a) of the ball 3 and the tubes 5 and 5'.

A flat portion 12 for arranging the two tubes 5 and 5' is formed on an outer periphery of a portion of the nut 1 other than the flange 11. Tube attachment holes 16 and 16' for attaching the tubes 5 and 5' are formed in the flat portion 12. Ends of the tubes 5 and 5' bent in a U shape are inserted into the tube attachment holes 16, 16' and fixed by the tube presser 6.

The lubricating oil is supplied into the nut 1 through a lubricating oil supply passage 17. The lubricating oil supply passage 17 extends in a radial direction of the nut 1 and penetrates through inner and outer peripheral surfaces, and has an opening 17a as an outer end that opens outward and an opening 17b as an inner end that is located in the vicinity of an offset point W (FIG. 2) on an inner peripheral surface of the nut 1 (or between a first nut and a second nut to be described later). Here, "vicinity" refers to a range within ± 1 pitch of the spiral groove 1a in the axial direction from the offset point W. Although an example in which the lubricating oil supply passage 17 is provided with one row of spiral grooves 1a with the offset point W interposed therebetween has been described, the lubricating oil supply passage 17 may be disposed between the spiral grooves 1a or at a groove bottom of a Gothic arc of the spiral grooves 1a.

In general, a preload is applied to a ball screw to improve positioning accuracy and rigidity. A preload method is classified into a single nut preload and a double nut preload according to the number of nuts used, and is classified into a tensile preload and a compression preload according to a preload direction. The ball screw according to the present embodiment is applied with an offset preload or a double nut preload, which is a compression preload. As illustrated in FIG. 2, the compression preload refers to a preload in which a load acts in a direction in which the balls 3 disposed on both sides with respect to the offset point W approach each other.

The double nut preload includes a spacer preload in which a preload is applied by sandwiching a spacer between two nuts (referred to as a first nut and a second nut) connected to each other, and a spring preload in which a preload is applied by sandwiching a spring between the first nut and the second nut.

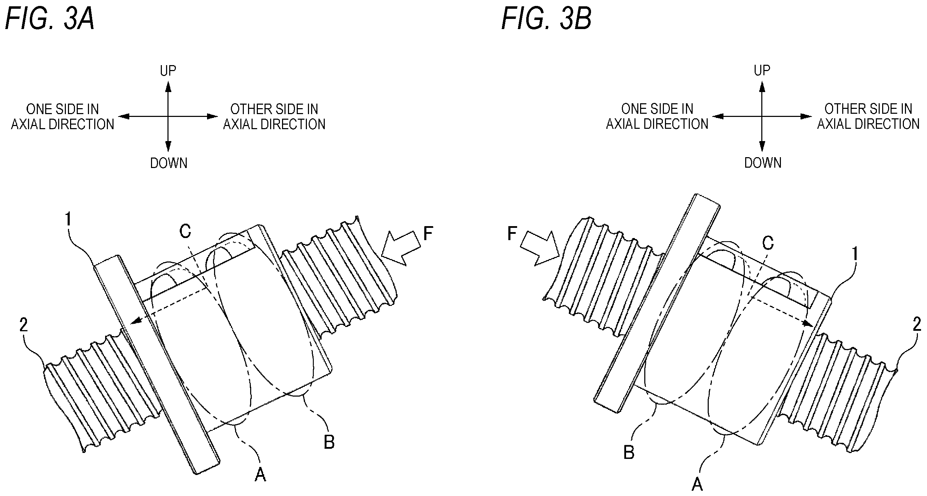

As shown in FIGS. 3A and 3B, the ball screw according to the present embodiment is disposed in a state where an axis X is inclined with respect to a horizontal direction. In the case of the ball screw in which the "tensile preload" is adopted as the preload method, in a state where the axis X is inclined, a region that receives the principal load F generated due to the gravity of the screw shaft 2 or a component attached to the screw shaft 2 is a region B on an upper side in the axial direction of the nut 1. Here, the lubricating oil supplied to the nut 1 from the lubricating oil supply passage 17 (FIG. 1) disposed at a center position in the axial direction of the nut 1 moves toward a region A on a lower side in the axial direction of the nut 1 as indicated by an arrow C due to the gravity, and thus there is a concern that the lubricating oil may be insufficient.

On the other hand, according to the ball screw in the present embodiment, since the "compression preload" is adopted, a region that receives the principal load F generated due to the gravity of the screw shaft 2 or a component attached to the screw shaft 2 is the region A on the lower side in the axial direction of the nut 1. Therefore, the lubricating oil supplied to the nut 1 from the lubricating oil supply passage 17 (FIG. 1) disposed at the center position in the axial direction of the nut 1 moves toward the region A as indicated by the arrow C due to the gravity, and thus the region A can be sufficiently lubricated even when the axis X is inclined in any direction (see FIGS. 3A and 3B). Further, the seals 4 and the O-rings 7 (FIG. 1) disposed on a region A side that receives a principal load F prevent leakage of the lubricating oil. Therefore, in the region A that receives the principal load F, there is no portion from which the lubricating oil leaks, and the lubricating oil accumulates, so that it is possible to obtain an effect that poor lubrication less likely to occur.

According to the ball screw in the present embodiment, even in a case where the vertical direction or the inclination is reversed and thus a direction of the principal load F is reversed, a direction in which the lubricating oil flows is reversed due to the gravity, so that the lubricating oil always spreads in the region A that receives the principal load F, which is effective for early wear and early peeling.

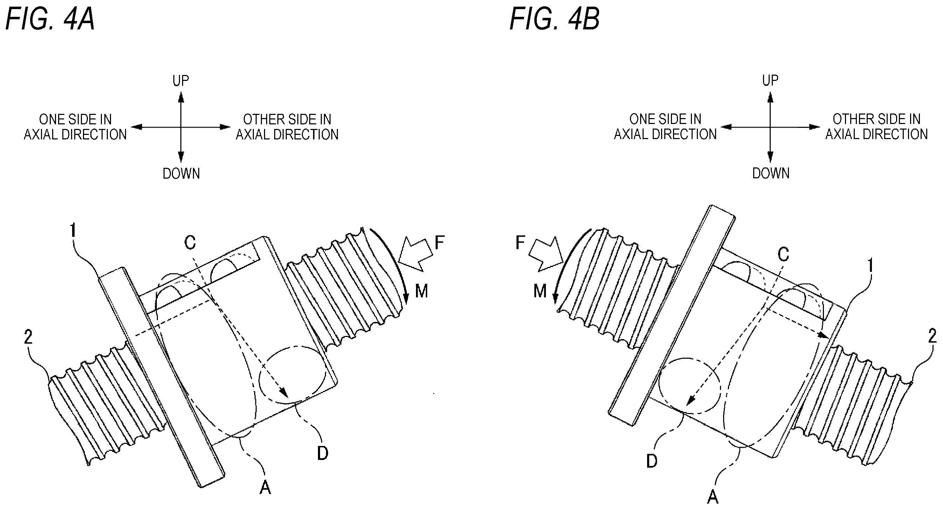

Further, according to the ball screw in the present embodiment, when a moment load M is applied in a state where the axis X of the screw shaft 2 is inclined, a region D that receives the load is a lower region on an upper end side of the nut 1 as shown in FIGS. 4A and 4B. Further, by receiving the moment load M, the region (an axial load loading region) A is closer to an upper portion of a lower end side of the nut 1 than when the moment load M is not received (FIGS. 3A and 3B).

Here, the lubricating oil supplied to the nut 1 from the lubricating oil supply passage 17 (FIG. 1) disposed at the center position of the nut 1 moves toward the region (moment load region) D in addition to the region A due to the gravity, so that the region D can be sufficiently lubricated. When the moment load M is applied simultaneously with the principal load F in the axial direction, lubrication of the region A and the region D is important, but according to the ball screw in the present embodiment, it is possible to cause the lubricating oil to spread to any region.

### (First Modification)

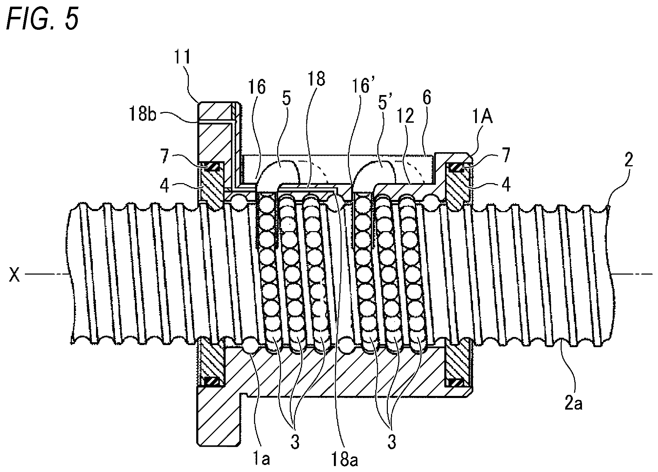

FIG. 5 is a cross-sectional view of a ball screw according to a modification. In the present modification, a nut 1A has a lubricating oil supply passage 18 that passes through the inside of the nut 1A (between the spiral groove 1a and the outer peripheral surface of the nut 1A, and inside the flange 11). The lubricating oil supply passage 18 at least a part of which extends in the axial direction has an opening 18a as an inner end that opens at a center position in the axial direction on an inner periphery of the nut 1A, and an opening 18b as an outer end that opens outward on a left end surface in the axial direction of the flange 11. The opening 18b may be provided in an outer peripheral surface of the flange 11.

According to the present modification, in order to avoid interference with other components, it is effective in a case where a pipe for supplying lubricating oil cannot be disposed at the center position in the axial direction of the nut 1A.

### (Second Modification)

For example, when the ball screw in FIG. 1 is used upside down, the tube 5 is located below. In this case, the lubricating oil may leak from between the tube 5 and the tube attachment hole 16.

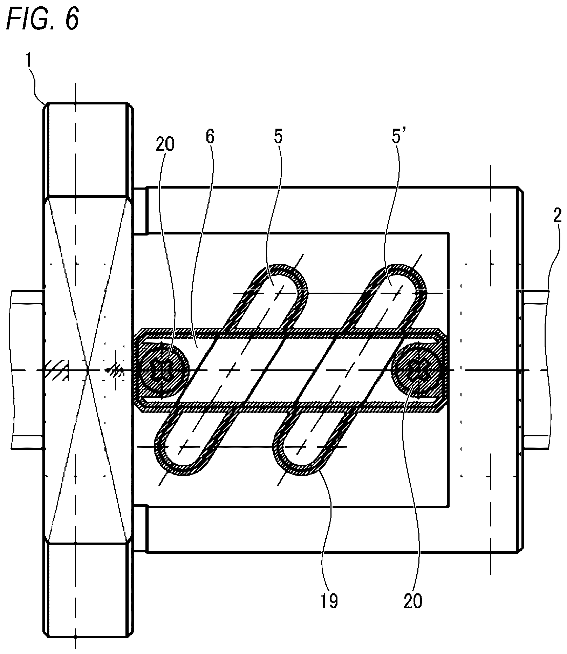

FIG. 6 is a bottom view of a ball screw according to another modification that can be suitably used for such an application. According to the present modification, a gap between the tube 5 and the tube attachment hole 16 of the nut 1, a gap between the tube 5 and the tube presser 6, and a gap between screw holes (not shown) and mounting screws 20 for fastening the tube presser 6 to the nut 1 are sealed by sealing materials 19. Accordingly, leakage of the lubricating oil from the inside of the nut 1 can be prevented. The sealing material 19 may be applied only to the gap between the tube 5 and the tube attachment hole 16.

The present invention is not limited to the above-described embodiments. Any component in the above-described embodiments can be modified within the scope of the present invention. In addition, any component can be added or omitted in the above-described embodiments.

Although various embodiments have been described above, it is needless to say that the present invention is not limited to these embodiments. It is apparent to those skilled in the art that various changes or modifications can be conceived within the scope described in the claims, and it is understood that the changes or modifications naturally fall within the technical scope of the present invention. In addition, the components described in the above-described embodiments may be combined in any manner without departing from the spirit of the invention.

The present application is based on a Japanese patent application (No. 2022-173621) filed on Oct. 28, 2022, contents of which are incorporated herein by reference.

### REFERENCE SIGNS LIST

1, 1A: nut
2: screw shaft
3: ball
4: seal
5, 5': tube
6: tube presser
7: O-ring
11: flange
16, 16': tube attachment hole
17, 18: lubricating oil supply passage
19: sealing material
20: mounting screw

## Claims

1. A ball screw used in a state where an axis is inclined with respect to a horizontal direction, the ball screw comprising:
a screw shaft in which an outer peripheral screw groove is formed;
a nut in which an inner peripheral screw groove is formed;
a plurality of balls accommodated in a plurality of rolling passages formed by the outer peripheral screw groove and the inner peripheral screw groove facing each other; and
a circulation member configured to return each of the balls from one end to the other end of each of the rolling passages, wherein
a compression preload is applied to the ball screw, and
the nut has a lubricating oil supply passage having one end that opens outward and the other end that opens in an inner peripheral surface in the vicinity of an offset point.

2. The ball screw according to claim 1, wherein
the lubricating oil supply passage penetrates in a radial direction of the nut.

3. The ball screw according to claim 1, wherein
the lubricating oil supply passage extends at least in an axial direction of the nut.

4. The ball screw according to claim 3, wherein
the nut has a flange, and
the lubricating oil supply passage opens outward at an end surface of the flange.

5. The ball screw according to any one of claims 1 to 4, wherein
a contact seal is disposed between an end of the nut and the screw shaft at least on a region side that receives a principal load.

6. The ball screw according to claim 5, wherein
an O-ring is disposed between the contact seal and the nut.
